# EUROPÄISCHE PATENTANMELDUNG

(11) **EP 2 606 949 A1**
(43) Veröffentlichungstag der Anmeldung: **26.06.2013**
(21) Anmeldenummer: 12193143.0
(22) Anmeldetag: 19.11.2012
(51) Int. Cl.: B01D 3/08, B01D 3/10, B01D 3/42

(54) **Destillationsvorrichtung**

(30) Priorität: 19.12.2011 DE 102011121650
(71) Anmelder: Hans Heidolph GmbH & Co. KG, 93309 Kelheim (DE)
(72) Erfinder: Carl, Joachim, 90547 Stein (DE); Jost, Dr. Patrick Nico, 89555 Steinheim (DE); Zehender, Jochen, 90431 Nürnberg (DE)
(74) Vertreter: Manitz, Finsterwald & Partner GbR

(57) **Zusammenfassung**

Die Erfindung betrifft eine Destillationsvorrichtung, insbesondere eine als ein Laborgerät ausgebildete Destillationsapparatur, mit einem Destillationsgefäß zur Aufnahme eines zu destillierenden Gemisches, wobei eine Entnahmeeinrichtung vorgesehen ist, die zur automatisierten Entnahme eines Destillationsrückstands aus dem Destillationsgefäß ausgebildet ist.

## Beschreibung

Die vorliegende Erfindung betrifft eine Destillationsvorrichtung, insbesondere eine als ein Laborgerät ausgebildete Destillationsapparatur, mit einem Destillationsgefäß zur Aufnahme eines zu destillierenden Gemisches.

Aus dem Stand der Technik sind Destillationsvorrichtungen bekannt, bei denen die Destillation in einem Batch- oder Chargenbetrieb erfolgt. Hierbei wird zunächst das Destillationsgefäß mit den Ausgangsstoffen befüllt. Danach findet die Destillation statt, d.h. durch thermisches Verdampfen und anschließendes Kondensieren zumindest eines der Ausgangsstoffe wird das Gemisch einerseits in ein Destillat bzw. Kondensat und andererseits in einen in dem Destillationsgefäß verbleibenden Rückstand getrennt. Dann wird das Destillationsgefäß aus der Gesamtvorrichtung entnommen und durch Abgießen des Rückstands entleert. Abschließend kann das Destillationsgefäß für eine nächste Befüllung vorbereitet, beispielsweise gereinigt und gewartet, werden.

Häufig, z.B. im Falle einer Extraktion oder eines chromatographischen Trennverfahrens, ist das zu gewinnende Produkt aber nur in geringen Mengen in dem zu destillierenden Gemisch enthalten. Es müssen dann eine Vielzahl von einzelnen Batchdurchläufen vorgenommen werden, um eine ausreichende Menge an Destillat zu gewinnen. Dies ist zeitaufwendig.

Der Erfindung liegt die Aufgabe zugrunde, eine Destillationsvorrichtung der eingangs genannten Art zu schaffen, die es ermöglicht, schnell auch eine größere Menge an Destillat oder an Destillationsrückstand herzustellen.

Diese Aufgabe wird durch eine Destillationsvorrichtung mit den Merkmalen des Anspruchs 1 gelöst, und insbesondere dadurch, dass eine Entnahmeeinrichtung vorgesehen ist, die zur automatisierten, insbesondere automatischen Entnahme eines Destillationsrückstands aus dem Destillationsgefäß ausgebildet ist.

Durch die Automatisierung kann die Destillationsvorrichtung die Entleerung des Destillationsgefäßes selbsttätig ausführen, d.h. die Entleerung des Destillationsgefäßes muss nicht mehr manuell vorgenommen werden. Insbesondere kann eine mehrmalige manuelle Entleerung des Destillationsgefäßes entfallen, so dass die Destillation bzw. der Destillationsprozess insgesamt beschleunigt werden kann.

Üblicherweise ist zur Kühlung des oder der verdampften Stoffe ein Kondensator und zum Sammeln des Destillats ein Destillat-Sammelgefäß, insbesondere ein Auffangkolben, vorgesehen. Bei der Destillationsvorrichtung kann es sich um einen Rotationsverdampfer handeln, und bei dem Destillationsgefäß um einen Verdampfungskolben. Bei der Destillationsvorrichtung kann es sich aber weiter beispielhaft auch um eine Rektifikationsanlage handeln.

Die Destillation ermöglicht, verschiedene in einem Gemisch enthaltene, insbesondere ineinander gelöste Stoffe voneinander zu trennen. Bei dem Rückstand handelt es sich um das jeweilige, zu einem jeweiligen Zeitpunkt insbesondere während eines laufenden Destillationsprozesses in dem Destillationsgefäß befindliche Gemisch, dessen anteilige Zusammensetzung sich im Laufe eines Destillationsprozesses ändert. Der Rückstand enthält zu dem jeweiligen Zeitpunkt neben dem wenigstens einen nicht zu verdampfenden Stoff in der Regel also auch noch einen Anteil des zumindest einen zu verdampfenden Stoffs, der zu dem jeweiligen Zeitpunkt noch nicht verdampft ist.

Insbesondere erfolgt die automatisierte Entnahme des Destillationsrückstands aus dem Destillationsgefäß diskontinuierlich, d.h. mit Unterbrechungen. Beispielsweise wird bzw. ist die Entnahme unterbrochen, wenn der Rückstand in dem Destillationsgefäß durch die Entnahme auf oder unter einen vorgegebenen Füllstand gefallen, eine vorgegebene Zeitdauer seit einem Start der Entnahme verstrichen oder ein vorgegebenes Volumen an Destillationsrückstand entnommen worden ist. Danach kann dem Destillationsgefäß wieder zu destillierendes Gemisch für einen weiteren Durchlauf bzw. einen weiteren oder den damit fortgesetzten Destillationsprozess zugeführt werden. Die Entnahme kann also in mehrere, zeitlich voneinander beabstandete Entnahmephasen unterteilt sein. Entnahme und Zuführung können alternierend vorgenommen werden. Grundsätzlich ist jedoch auch eine kontinuierliche Entnahme möglich.

Nach einer bevorzugten Ausbildung der Erfindung erfolgt die automatisierte Entnahme des Destillationsrückstands, insbesondere ein jeweiliger Start bzw. Beginn der automatisierten Entnahme des Destillationsrückstands, automatisch und/oder in Abhängigkeit von wenigstens einem Destillationsparameter. Unter einem automatischen Start ist ein Start zu verstehen, der nicht manuell durch eine Bedienperson der Destillationsvorrichtung ausgelöst wird. Zur automatisch und/oder in Abhängigkeit von wenigstens einem Destillationsparameter erfolgenden Entnahme kann eine entsprechend ausgebildete Steuereinrichtung vorgesehen sein. Insbesondere kann eine automatisierte Entnahme aufgrund einer mehrfachen Zuführung des zu destillierenden Gemisches in das Destillationsgefäß auch mehrfach gestartet werden. Bei einem Destillationsparameter handelt es sich insbesondere um einen Parameter, der den Fortschritt eines laufenden Destillationsprozesses anzeigt. Bei einem Destillationsparameter kann es sich beispielsweise um einen chemischen und/oder physikalischen Parameter des Gemisches oder eines Teils hiervon oder um eine vorgegebene Zeitdauer handeln.

Insbesondere ist zur Ermittlung des wenigstens einen Destillationsparameter wenigstens eine jeweilige Messeinrichtung, beispielsweise wenigstens ein jeweiliger Sensor, vorgesehen. Aus dem oder den Messsignalen der Messeinrichtung bzw. Messeinrichtungen kann der Destillationsparameter mittelbar oder unmittelbar bestimmt werden.

Bevorzugt erfolgt der jeweilige Start, wenn der wenigstens eine Destillationsparameter einen vorgegebenen Grenzwert erreicht oder über- bzw. unterschreitet. Bei dem jeweiligen Grenzwert kann es sich also - abhängig von dem jeweiligen Destillationsparameter - um einen oberen oder unteren Grenzwert handeln. Vorzugsweise ist der vorgegebene Grenzwert einstellbar, d.h. in seinem Wert variierbar, und damit an die jeweilige Destillation anpassbar.

Beispielsweise entspricht der wenigstens eine Destillationsparameter einem Maß für die Konzentration eines Stoffes des Gemisches in dem Destillationsgefäß. Bei dem Maß kann es sich um ein Maß handeln, dass die genannte Konzentration anzeigt bzw. auf diese schließen lässt, oder aber um die Konzentration eines Stoffes des Gemisches in dem Destillationsgefäß selbst. Beispielsweise kann auf die Konzentration eines zu verdampfenden Stoffes oder auf die Konzentration eines in dem Destillationsgefäß bei der Destillation zurückbleibenden Stoffes abgestellt werden.

Vorzugsweise ist der wenigstens eine Destillationsparameter aus der Gruppe bestehend aus pH-Wert des Destillationsrückstands, elektrischer Leitfähigkeit des Destillationsrückstands, Extinktionskoeffizient des Destillationsrückstands, Zeitdauer der Destillation, Füllstand des Destillationsrückstands im Destillationsgefäß, Masse des Destillationsrückstands im Destillationsgefäß, Volumen des Destillationsrückstands im Destillationsgefäß, Füllstand des Destillats in einem Destillat-Sammelgefäß, Masse des Destillats in einem Destillat-Sammelgefäß, Volumen des Destillats in einem Destillat-Sammelgefäß, Änderung einer Siedetemperatur des Gemisches, Druckänderung in dem Destillationsgefäß, Volumenstrom des Destillats, Massenstrom des Destillats und Einschaltdauer eines Zuführventils oder einer beliebigen Untergruppe hiervon ausgewählt. Die Einschaltdauer eines Zuführventils ist umso geringer, je mehr Destillationsrückstand sich im Destillationsgefäß befindet.

Nach einer anderen Ausbildung der Erfindung ist zur automatisierten, insbesondere automatischen Entnahme des Destillationsrückstands, insbesondere für einen jeweiligen Start und/oder ein jeweiliges Ende der Entnahme, eine Zeit- bzw. Zeitgliedsteuerung, insbesondere mit einem Timer oder einem Zeitgeber, vorgesehen. Die Entnahme des Destillationsrückstands kann dann in Abhängigkeit von einer vorgegebenen Zeitdauer, insbesondere nach Ablauf einer vorgegebenen Zeitdauer und insbesondere für eine vorgegebene Zeitdauer, erfolgen.

Zusätzlich oder alternativ kann ein jeweiliger Start der automatisierten Entnahme des Destillationsrückstands manuell auslösbar sein. Der Vorteil, das Destillationsgefäß zum Entleeren nicht von der Destillationsvorrichtung lösen zu müssen, ist auch in diesem Fall gewährleistet. Die Entnahme ist dabei weiterhin automatisiert.

Die automatisierte Entnahme des Destillationsrückstands erfolgt insbesondere dann, wenn gerade kein Destillationsprozess im Gange ist. Hierdurch wird eine Störung des Destillationsprozesses vermieden. Grundsätzlich kann die automatisierte Entnahme des Destillationsrückstands jedoch auch während eines laufenden Destillationsprozesses erfolgen.

Vorzugsweise erfolgt die automatisierte Entnahme des Destillationsrückstands, während an dem Destillationsgefäß ein Unterdruck angelegt ist. Ein an das Destillationsgefäß angelegtes Vakuum muss dann nicht gebrochen werden. Grundsätzlich ist es jedoch auch möglich, dass die Entnahme bei Atmosphärendruck bzw. ohne Anlegen eines Unterdrucks an das Destillationsgefäß erfolgt.

Bevorzugt umfasst die Entnahmeeinrichtung zumindest eine in das Destillationsgefäß hineinreichende Saugleitung und ggf. zusätzlich eine an die Saugleitung angeschlossene Saugpumpe und/oder ein an die Saugleitung angeschlossenes Ventil. Wird ein geschlossenes Rückstandsammelgefäß, in dem der zu entnehmende Destillationsrückstand gesammelt werden soll, mit Unterdruck bzw. Vakuum beaufschlagt, kann bei einer entsprechend gerichteten Druckdifferenz zwischen Destillationsgefäß und Rückstandsammelgefäß auf eine Saugpumpe verzichtet werden, da der Destillationsrückstand aufgrund der Druckdifferenz dann von selbst in das Rückstandsammelgefäß gesaugt wird. Dies ist insbesondere dann von Vorteil, wenn die Saugpumpe durch den Destillationsrückstand geschädigt wird. Durch das Vorsehen des vorgenannten Ventils kann bei einer hierzu entgegen gerichteten Druckdifferenz ein Rückfluss des Destillationsrückstands in das Destillationsgefäß verhindert werden.

Insbesondere kann die Entnahmeeinrichtung oder zumindest ein Teil hiervon durch eine Schliffhülse des Destillationsgefäßes hindurchgeführt sein.

Nach einer anderen Ausbildung der Erfindung ist eine Zuführeinrichtung vorgesehen, die zur automatisierten, insbesondere automatischen Zuführung des zu destillierenden Gemisches in das Destillationsgefäß ausgebildet ist. Somit kann auch das Zuführen der Ausgangsstoffe beschleunigt werden. Die Zuführeinrichtung kann eine Zuführleitung und ggf. eine Pumpe umfassen. Bei Anliegen eines Unterdrucks an dem Destillationsgefäß ist die Pumpe nicht zwingend erforderlich, da das Gemisch aufgrund einer dann herrschenden Druckdifferenz von selbst in das Destillationsgefäß gesaugt wird. Bevorzugt ist die Entnahme unterbrochen, wenn dem Destillationsgefäß das zu destillierende Gemisch, ggf. für einen weiteren Durchlauf, automatisiert zugeführt wird.

Die vorstehend erläuterten Weiterbildungen der Erfindung sind insbesondere derart zu verstehen, dass die Destillationsvorrichtung oder zumindest ein jeweiliger Teil hiervon dazu ausgebildet ist, die jeweilige Weiterbildung zu realisieren.

Die Erfindung betrifft weiterhin ein Verfahren zum Destillieren eines in einem Destillationsgefäß befindlichen Gemisches, wobei ein Destillationsrückstand automatisiert aus dem Destillationsgefäß entnommen wird.

Bevorzugte Ausführungsformen des erfindungsgemäßen Verfahrens ergeben sich in analoger Weise aus den Weiterbildungen der erfindungsgemä-βen Destillationsvorrichtung.

Ein nicht beschränkendes Ausführungsbeispiel der Erfindung ist in der Zeichnung dargestellt und wird nachfolgend beschrieben. Es zeigt, in schematischer Darstellung,

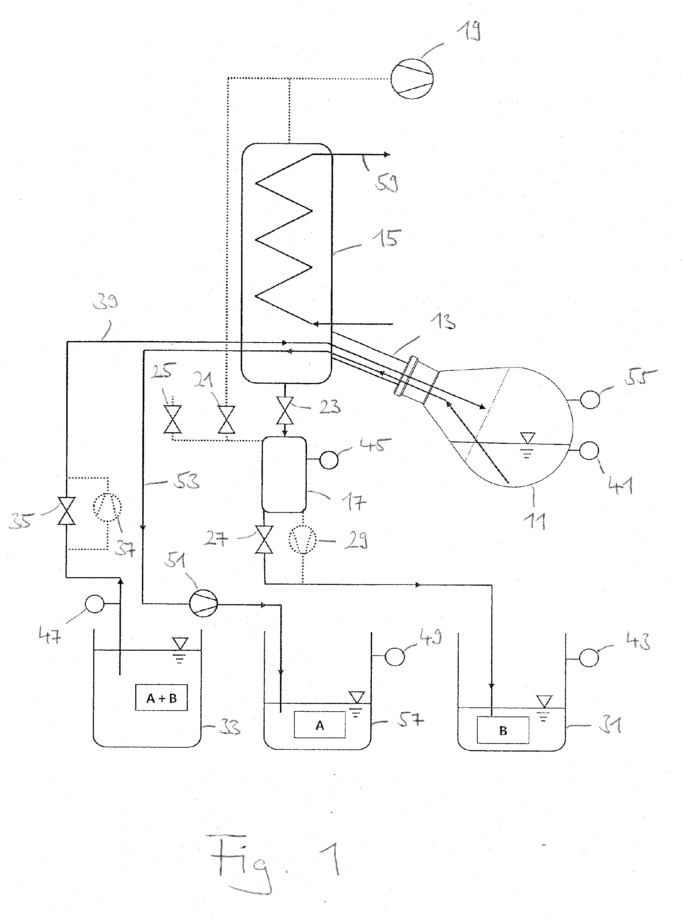

- Fig. 1: einen Rotationsverdampfer mit einem Verdampfungskolben und einer Entnahmeeinrichtung zur automatisierten Entnahme eines Destillationsrückstands aus dem Verdampfungskolben.

Der in Fig. 1 dargestellte Labor-Rotationsverdampfer umfasst einen nicht dargestellten Rotationsantrieb für einen als Rundkolben oder V-Kolben oder dergleichen ausgebildeten Verdampfungskolben 11, der in einem nicht dargestellten Heizbad erwärmt werden kann, um aus einem darin befindlichen Flüssigkeitsgemisch ein Destillat zu verdampfen. Das verdampfte Destillat gelangt dann über eine durch den Rotationsantrieb hindurchgeführte Dampfdurchführung 13 in einen Kondensator 15, der von einem Kühlmedium 59 durchströmt wird, um dort zu kondensieren. Anschließend wird das kondensierte Destillat in einem Auffangkolben 17 gesammelt, wobei zwischen dem Kondensator 15 und dem Auffangkolben 17 ein Ventil 23 vorgesehen ist. Der im Verdampfungskolben 11 zurückbleibende Destillationsrückstand kann weiter aufgearbeitet oder analysiert werden.

Darüber hinaus ist eine Vakuumpumpe 19 vorgesehen, um an den Kondensator 15 und damit an den Verdampfungskolben 11 sowie - über ein Evakuierungsventil 21 - ggf. zusätzlich auch an den Auffangkolben 17 einen Unterdruck anzulegen, wodurch die Siedetemperatur des Destillats gesenkt werden kann. Darüber hinaus ist der Auffangkolben 17 über ein Belüftungsventil 25 mit Atmosphärendruck verbindbar.

Von dem Auffangkolben 17 kann das dort gesammelte Destillat über ein weiteres Ventil 27 und/oder eine Pumpe 29 in einen Sammelbehälter 31 für das Destillat abgelassen bzw. gefördert werden. Zur Bestimmung des Füllstands des Destillats im Auffangkolben 17 ist ein Füllstandsensor 45 vorgesehen. Erreicht der dortige Füllstand eine vorbestimmte obere Grenze, wird - um den Auffangkolben 17 zumindest teilweise zu entleeren - mittels einer nicht dargestellten Steuerung automatisch das Ventil 27 geöffnet bzw. die Pumpe 29 in Betrieb gesetzt. Der Füllstand des Sammelbehälters 31 wird mittels eines weiteren Füllstandsensors 43 ermittelt, um ein Überlaufen des Sammelbehälters 31 zu vermeiden. Alternativ kann der Füllstand des Sammelbehälters 31 beispielsweise auch mittels eines Gewichtssensors bzw. einer Waage überwacht werden.

Weiterhin ist ein Vorratsbehälter 33 für das zu destillierende Gemisch, das beispielsweise aus zwei voneinander verschiedenen Ausgangsstoffen A und B besteht, vorgesehen. Der Vorratsbehälter 33 steht über eine Zuführeinrichtung umfassend eine Zuführleitung 39, die durch die Dampfdurchführung 13 hindurch in das Innere des Verdampfungskolbens 11 hineinragt, und ein in der Zuführleitung 39 angeordnetes Zuführventil 35 und/oder eine dort angeordnete Pumpe 37 mit dem Verdampfungskolben 11 in Fluidverbindung. Das Zuführventil 35 bzw. die Pumpe 37 ist ebenfalls über die vorgenannten Steuerung und in Abhängigkeit von dem Füllstand des Gemisches im Verdampfungskolben 11 steuerbar. Sobald der Füllstand des Gemisches im Verdampfungskolben 11 einen vorgegebenen Füllstand unterschritten hat, wird automatisch zu destillierendes Gemisch von dem Vorratsbehälter 33 in den Verdampfungskolben 11 zudosiert, insbesondere solange, bis im Verdampfungskolben 11 ein vorgegebener Füllstand erreicht ist. Der Füllstand des Gemisches im Verdampfungskolben 11 wird durch einen weiteren Füllstandsensor 41 bestimmt. Mit einem Sensor 47 kann der Massen- und/oder Volumenstrom durch die Zuführleitung 39 gemessen, geregelt und/oder überwacht werden.

Erfindungsgemäß umfasst der Rotationsverdampfer ferner eine fest installierte bzw. angebrachte Entnahmeeinrichtung, um den im Verdampfungskolben 11 befindlichen Destillationsrückstand zumindest teilweise aus dem Verdampfungskolben 11 zu entnehmen bzw. auszuschleusen. Die Entnahmeeinrichtung umfasst eine Saugpumpe 51, mit der über eine Saugleitung 53 der im Verdampfungskolben 11 zurückbleibende Destillationsrückstand abgepumpt werden kann. Die Saugleitung 53 ragt hierzu durch eine Schliffhülse des Verdampfungskolbens 11 in den Verdampfungskolben 11 hinein. Der entnommene Destillationsrückstand wird in einem Rückstand-sammelgefäß 57 gesammelt, dessen Füllstand mit einem weiteren Füllstandsensor 49 überwacht werden kann.

Die Saugpumpe 51 ist - wie auch das Ventil 27 bzw. die Pumpe 29 und das Ventil 35 bzw. die Pumpe 37 - durch die vorgenannte Steuerung steuerbar, und zwar in Abhängigkeit von einem Messsignal, das einer physikalischen und/oder chemischen Messgröße des im Verdampfungskolben 11 aktuell vorhandenen Gemisches bzw. Destillationsrückstands entspricht und das von einem in oder an dem Verdampfungskolben 11 angeordneten Sensor 55 bereitgestellt wird. Erreicht, über- oder unterschreitet das Messsignal einen vorgegebenen, einstellbaren Grenzwert, wird der Destillationsrückstand teilweise oder vollständig aus dem Verdampfungskolben 11 abgepumpt.

Bei der Messgröße handelt es sich um eine Messgröße, die ein Maß für den Fortschritt eines laufenden Destillationsprozesses liefert. Insbesondere gibt die Messgröße - direkt oder indirekt - Aufschluss darüber, welche Konzentration der aus dem Gemisch zu verdampfende Stoff und/oder der nicht zu verdampfende Stoff in dem Destillationsrückstand besitzt bzw. welche absolute und/oder relative Menge des zu verdampfenden Stoffes noch in dem Destillationsrückstand enthalten ist. Beispielweise kann es sich bei dem Sensor um einen Gewichtssensor handeln, der das jeweilige Gewicht des im Verdampfungskolben 11 aktuell befindlichen Destillationsrückstands misst, wobei die Entnahme des Destillationsrückstands gestartet wird, wenn das Gewichtssignal einen vorgegebenen Gewichtswert erreicht oder überschreitet.

Für die Steuerung der Entnahme des Destillationsrückstands sind die vorgenannten Sensoren, insbesondere die Sensoren 45 und 55, nicht zwingend erforderlich. Gemäß einer weiteren Ausführungsform der Erfindung kann die Entnahme des Destillationsrückstands auch, insbesondere ausschließlich, zeitgesteuert erfolgen.

Die Erfindung schafft insbesondere eine automatische Entnahme des Destillationsrückstands aus dem jeweiligen Destillationsgefäß. Gerade bei Labor-Destillationsvorrichtungen, bei denen das Fassungsvolumen des Destillationsgefäßes naturgemäß beschränkt ist, ergibt sich in Verbindung mit einer automatischen Zuführung des zu destillierendem Gemisches in das Destillationsgefäß der Vorteil, dass auch größere Mengen, die das Fassungsvermögen des Destillationsgefäßes überschreiten, in einem unbeaufsichtigten Dauerbetrieb, bei dem abwechselnd eine Entnahme von Destillationsrückstand aus dem Destillationsgefäß und eine Zuführung von zu destillierendem Gemisch in das Destillationsgefäß erfolgt, beispielsweise über Nacht oder am Wochenende, destilliert werden können.

### Bezugszeichenliste

- 11: Verdampfungskolben
- 13: Dampfdurchführung
- 15: Kondensator
- 17: Auffangkolben
- 19: Vakuumpumpe
- 21: Evakuierungsventil
- 23: Ventil
- 25: Belüftungsventil
- 27: Ventil
- 29: Pumpe
- 31: Sammelbehälter
- 33: Vorratsbehälter
- 35: Zuführventil
- 37: Pumpe
- 39: Zuführleitung
- 41: Füllstandsensor
- 43: Füllstandsensor
- 45: Füllstandsensor
- 47: Sensor
- 49: Füllstandsensor
- 51: Saugpumpe
- 53: Saugleitung
- 55: Sensor
- 57: Rückstandsammelgefäß
- 59: Kühlmedium

## Patentansprüche

1. Destillationsvorrichtung, insbesondere als ein Laborgerät ausgebildete Destillationsapparatur, mit einem Destillationsgefäß (11) zur Aufnahme eines zu destillierenden Gemisches,
**dadurch gekennzeichnet,**
**dass** eine Entnahmeeinrichtung (51, 53) vorgesehen ist, die zur automatisierten Entnahme eines Destillationsrückstands aus dem Destillationsgefäß (11) ausgebildet ist.

2. Destillationsvorrichtung nach Anspruch 1,
**dadurch gekennzeichnet,**
**dass** die automatisierte Entnahme des Destillationsrückstands aus dem Destillationsgefäß (11) diskontinuierlich erfolgt.

3. Destillationsvorrichtung nach Anspruch 1 oder 2,
**dadurch gekennzeichnet,**
**dass** die automatisierte Entnahme des Destillationsrückstands, insbesondere ein jeweiliger Start der automatisierten Entnahme des Destillationsrückstands, automatisch und/oder in Abhängigkeit von wenigstens einem Destillationsparameter erfolgt.

4. Destillationsvorrichtung nach Anspruch 3,
**dadurch gekennzeichnet,**
**dass** zur Ermittlung des wenigstens einen Destillationsparameter wenigstens eine jeweilige Messeinrichtung (55) vorgesehen ist.

5. Destillationsvorrichtung nach Anspruch 3 oder 4,
**dadurch gekennzeichnet ,**
**dass** der jeweilige Start erfolgt, wenn der wenigstens eine Destillationsparameter einen vorgegebenen Grenzwert erreicht.

6. Destillationsvorrichtung nach Anspruch 5,
**dadurch gekennzeichnet ,**
**dass** der vorgegebene Grenzwert einstellbar ist.

7. Destillationsvorrichtung nach zumindest einem der Ansprüche 3 bis 6,
**dadurch gekennzeichnet ,**
**dass** der wenigstens eine Destillationsparameter einem Maß für die Konzentration eines Stoffes des Gemisches in dem Destillationsgefäß (11) entspricht.

8. Destillationsvorrichtung nach zumindest einem der vorstehenden Ansprüche,
dass zur automatisierten Entnahme des Destillationsrückstands eine Zeitsteuerung vorgesehen ist.

9. Destillationsvorrichtung nach zumindest einem der vorstehenden Ansprüche,
**dadurch gekennzeichnet ,**
**dass** ein jeweiliger Start der automatisierten Entnahme des Destillationsrückstands manuell auslösbar ist.

10. Destillationsvorrichtung nach zumindest einem der vorstehenden Ansprüche,
**dadurch gekennzeichnet ,**
**dass** die automatisierte Entnahme des Destillationsrückstands erfolgt, wenn kein Destillationsprozess im Gange ist.

11. Destillationsvorrichtung nach zumindest einem der vorstehenden Ansprüche,
**dadurch gekennzeichnet ,**
**dass** die automatisierte Entnahme des Destillationsrückstands erfolgt, während an dem Destillationsgefäß (11) ein Unterdruck angelegt ist.

12. Destillationsvorrichtung nach zumindest einem der vorstehenden Ansprüche,
**dadurch gekennzeichnet ,**
**dass** die Entnahmeeinrichtung (51, 53) zumindest eine in das Destillationsgefäß (11) hineinreichende Saugleitung (53) umfasst.

13. Destillationsvorrichtung nach zumindest einem der vorstehenden Ansprüche,
**dadurch gekennzeichnet ,**
**dass** die Entnahmeeinrichtung (51, 53) oder wenigstens ein Teil (53) hiervon durch eine Schliffhülse des Destillationsgefäßes (11) hindurchgeführt ist.

14. Destillationsvorrichtung nach zumindest einem der vorstehenden Ansprüche,
**dadurch gekennzeichnet ,**
**dass** eine Zuführeinrichtung (35, 37, 39) vorgesehen ist, die zur automatisierten Zuführung des zu destillierenden Gemisches in das Destillationsgefäß (11) ausgebildet ist.

15. Verfahren zum Destillieren eines in einem Destillationsgefäß (11) befindlichen Gemisches,
**dadurch gekennzeichnet ,**
**dass** ein Destillationsrückstand automatisiert aus dem Destillationsgefäß (11) entnommen wird.
